(19) **Europäisches Patentamt**

**European Patent Office**

**Office européen des brevets**

(11) **EP 1 230 972 B1**

(12) **FASCICULE DE BREVET EUROPEEN**

(45) Date de publication et mention
de la délivrance du brevet:
**03.05.2006 Bulletin 2006/18**

(51) Int Cl.:
***B01D 71/02*** *(2006.01)*     ***C01B 39/02*** *(2006.01)*

(21) Numéro de dépôt: **02290252.2**

(22) Date de dépôt: **04.02.2002**

(54) **Procédé de préparation de membranes zéolithiques supportées par cristallisation contrôlées en température**

Verfahren zur Herstellung von getragerten Zeolithmembranen durch temperaturgesteuerte Kristallisation

Process for preparing supported zeolitic membranes by temperature controlled crystallisation

(84) Etats contractants désignés:
**DE ES GB IT NL**

(30) Priorité: **07.02.2001 FR 0101746**

(43) Date de publication de la demande:
**14.08.2002 Bulletin 2002/33**

(73) Titulaire: **Institut Français du Pétrole**
**92852 Rueil-Malmaison Cedex (FR)**

(72) Inventeurs:
• **Chau, Christophe**
  **92500 Rueil Malmaison (FR)**
• **Prevost, Isabelle**
  **92500 Rueil-Malmaison (FR)**
• **Dalmon, Jean-Alain**
  **69001 Lyon (FR)**
• **Miachon, Sylvain**
  **69007 Lyon (FR)**

(56) Documents cités:
  WO-A-00/33948       WO-A-95/29751
  US-A- 5 089 243     US-A- 5 723 397

Remarques:
Le dossier contient des informations techniques présentées postérieurement au dépôt de la demande et ne figurant pas dans le présent fascicule.

**Description**

L'invention concerne un procédé d'élaboration contrôlée de membranes de zéolithe supportée.

Les zéolithes présentent les avantages principaux de posséder une structure cristalline et une taille de pores définies, d'avoir des propriétés de surface modulables (en termes notamment d'hydrophilie /organophilie et d'acidité) et liées à la composition chimique de la charpente. Les zéolithes, de par leur topologie particulière et leurs propriétés d'échange de cations, peuvent donc être utilisées pour des applications de séparation par adsorption sélective ou de réactions catalytiques. Pour un type structural donné, lié à la famille cristalline à laquelle appartient chaque zéolithe (ces types structuraux sont décrits dans l'ouvrage de Meier, W.M., Olson, D.H., in Atlas of Zeolite Structure-Types (1992), Butterworth-Heinemann Ed.), une séparation de molécules présentes dans un mélange peut avoir lieu par adsorption sélective et/ou exclusion par la taille en particulier. Cependant, la séparation sur une zéolithe en poudre est un procédé discontinu. Une membrane de zéolithe offre en revanche la possibilité de séparer des molécules par un procédé continu, ce qui peut s'avérer particulièrement intéressant du point de vue technologique comme économique.

Divers procédés d'élaboration de membranes de zéolithe ont déjà été décrits. La voie hydrothermale mettant en jeu des supports poreux présente l'avantage de stabiliser les cristaux de zéolithes dans une matrice poreuse (alumine, inox par exemple) et à la surface de celle-ci. Dans la demande de brevet EP-A-0 778 075 est décrit un procédé d'élaboration de membranes de zéolithe supportée par du verre poreux. Le brevet US-A-5,429,743 et la demande de brevet internationale WO 95/29751 décrivent des protocoles d'obtention de membranes composites supportées par une matrice macroporeuse inorganique. On pourra également se référer aux documents US-A-4,099,692, WO 93/19840, US-A-5,567,664 et WO 96/01683. Dans la demande de brevet internationale WO 00/33948, il est décrit un procédé d'obtention de membranes composites de zéolithe supportée sur des solides tubulaires éventuellement multi-canaux. Ces matériaux membranaires composites à base de zéolithe sont formés d'une phase zéolithique déposée sur un support.

Ces préparations de matériaux membranaires s'effectuent par traitement thermique isotherme d'un mélange contenant les précurseurs de la phase zéolithique, laquelle est active en séparation.

La cristallisation intervient dès lors à une température fixée et maintenue lors de cette étape de synthèse (traitement isotherme). L'étape de cristallisation de la zéolithe peut également être reproduite à plusieurs reprises. La synthèse est alors reproduite après retour éventuel du matériau à température ambiante, lavage et séchage dudit matériau. Les opérations sont identiques et permettent le dépôt de couches successives et/ou de cristaux de zéolithes qui comblent les espaces interparticulaires. Dans ces cas, la durée de la préparation est considérablement rallongée. Ce mode de synthèse en plusieurs étapes favorise également l'obtention de couches épaisses de zéolithes qui peuvent se fissurer lors de la calcination de la membrane (Vroon, Z.A.E.P., Keizer, K., Burggraaf, A.J., Verweij, H., *J. Membr. Sci.* 144 (1998) 65-76). Par ailleurs, l'augmentation d'épaisseur peut considérablement limiter le transfert de matière à travers la membrane lors de l'opération de séparation, et diminuer ainsi l'intérêt technique et économique de l'opération de séparation par membrane, dû à une réduction de productivité de ladite étape de séparation. En outre, ce mode de synthèse en plusieurs étapes nécessite une quantité importante des précurseurs de la phase zéolithique, ce qui augmente notamment le coût des matières premières et précurseurs utilisés. Il présente également l'inconvénient d'allonger la durée d'obtention du matériau membranaire et d'augmenter le coût opératoire de l'opération de séparation.

En dehors du domaine de préparation de matériaux membranaires, des cristaux de zéolithes (matériau en poudre) ont été obtenus lors de préparations polythermes, menées à des températures différentes selon l'avancement de la réaction, en absence de support. Le brevet US-A-5,089,243 décrit la préparation de poudres d'alumino-silicates par un procédé de cristallisation en deux étapes sans agent organique. La première étape intervient entre 240°C et 325°C durant 1 à 20 minutes. La deuxième étape est menée entre 120°C et 225°C durant 1 à 100 heures. Récemment, des cristaux de zéolithes non supportés ont été obtenus par élévation de température en cours de synthèse (Li, Q., Creaser, D., Sterte, *J., Microporous and Mesoporous Mater.* 31 (1999) 141-150). Une première étape intervient à 60°C ou 80°C et permet de contrôler le nombre et la densité de cristaux. Une élévation de température à 100°C favorise la croissance des cristallites. Dans ces deux types de préparation, les matériaux obtenus sont des poudres, sous la forme de solides divisés, et ne constituent en aucun cas des matériaux membranaires avec une couche solide continue utilisable en séparation. Le brevet US-A-5,723,397 décrit un procédé de préparation d'une couche d'un tamis moléculaire sur un support poreux par une cristallisation au moyen d'une programmation thermique non isotherme.

Une des difficultés liées à la préparation de membranes à base de zéolithe réside dans le contrôle de la cristallisation de la zéolithe afin d'obtenir des cristaux de zéolithe bien liés au support, localisés principalement dans la porosité du support, formant ainsi une couche composite zéolithe/support continue (obtenue en obstruant les espaces vides du support par des cristaux de phase zéolithique) et, de préférence suffisamment fine pour limiter la résistance de transfert à travers le matériau membranaire. La localisation majoritaire de la phase zéolithique dans la porosité du support confère une très bonne résistance thermique et mécanique au matériau membranaire. Toutefois, il n'est pas exclu qu'une partie minoritaire de la phase zéolithique soit localisée à la surface externe du support. C'est un des objets essentiels de la présente invention que de fournir un procédé d'élaboration contrôlée de membranes de zéolithe supportée dans lesquelles la phase zéolithique présente les caractéristiques énoncées ci-dessus. Les membranes zéolithiques ainsi obtenues par le procédé de l'invention présentent un meilleur pouvoir séparateur que les membranes synthétisées selon les procédés antérieurs. Elles présentent également une très bonne intégrité structurale, c'est-à-dire une absence de défauts dans la structure de la phase zéolithique et une absence d'espaces interparticulaires, c'est-à-dire de vides présents entre les cristaux de la zéolithe.

Ainsi la présente invention concerne une méthode de préparation d'une membrane zéolithe supportée constituée d'une couche composite zéolithe/support continue, d'épaisseur contrôlée, dont les cristaux de zéolithe sont localisés principalement dans la porosité d'un support poreux et éventuellement à la surface externe dudit support. Cette méthode de préparation comporte au moins la formation d'un gel précurseur de la zéolithe, la mise en contact de celui-ci avec ledit support et la cristallisation de la zéolithe à partir dudit gel. La méthode de préparation selon l'invention est caractérisée en ce que ladite zéolithe est cristallisée en mettant en oeuvre une programmation thermique non isotherme comportant successivement au moins trois étapes constituées par un premier palier de température mené à une température comprise entre 50°C et 300°C suivi d'un refroidissement à une température strictement inférieure à 50°C lui-même suivi d'un second palier de température mené à une température égale à celle du premier palier Cette méthode de préparation selon l'invention permet d'obtenir des matériaux de hautes performances en séparation en une seule étape (*one-pot cristallization* selon la terminologie anglosaxonne).

Le premier palier de température est préférentiellement mené à une température comprise entre 80 et 220°C. Ce premier palier est maintenu pendant une durée comprise entre 1 heure et 15 jours et préférentiellement entre 3 heures et 72 heures.

La baisse de la température du premier palier est telle que le mélange est refroidi à une température strictement inférieure à 50 °C, de préférence inférieure à 40 °C et est maintenu à cette température pendant une durée de 1 minute à 72 heures, de manière préférée de 20 minutes à 9 heures et de manière encore plus préférée de 30 minutes à 5 heures. Le second palier de température est mené à une température égale à celle du premier palier. Ce second palier est maintenu pendant une durée comprise entre 1 heure et 15 jours et préférentiellement entre 3 heures et 72 heures.

Le procédé d'élaboration de membrane zéolithique selon l'invention comprend au moins (a) la formation d'un gel (ou d'une solution) constitué d'un mélange de précurseurs de la zéolithe contenant les agents nécessaires à la formation dudit gel et sa mise en contact avec le support poreux, (b) la cristallisation de la zéolithe à partir dudit gel selon une programmation thermique non isotherme telle que définie précédemment et incluant successivement au moins un palier de température à une température comprise entre 50 et 300°C, un refroidissement à une température strictement inférieure à 50°C suivi d'un deuxième palier de température mené à une température égale à celle du premier palier et enfin, (c) l'élimination des agents résiduels.

Ce procédé conduit à une membrane zéolithe supportée constituée d'une couche composite zéolithe/support, continue et mince, dont la phase zéolithique formée de cristaux de zéolithe est localisée principalement dans la porosité d'un support poreux et éventuellement à la surface externe dudit support, ce qui permet une bonne adhésion de la zéolithe au support et une résistance thermique et mécanique accrue du matériau composite. De plus, l'épaisseur de cette couche ainsi que la taille et la morphologie des cristaux sont contrôlées. L'épaisseur est contrôlée par la quantité de gel, et donc notamment par la quantité d'agents précurseurs de la zéolithe mis en jeu dans la préparation, incorporé dans la matrice poreuse. La taille et la morphologie dépendent des proportions relatives des différents réactifs constitutifs du gel précurseur de la zéolithe. Par conséquent, ce procédé peut conduire à la formation de couches d'épaisseur faible, particulièrement adaptées à une utilisation en séparation.

Plus précisément, dans le procédé de l'invention, le support est constitué d'un matériau poreux, dont la fraction de volume poreux total est supérieure à 5%, préférentiellement supérieure à 40%, et dont les pores ont un diamètre compris entre 4 nanomètres et 100 micromètres, préférentiellement entre 4 nanomètres et 10 micromètres. Le support est constitué d'un matériau préférentiellement inorganique, mais il peut être de nature organique, métallique ou mixte. Un support en céramique à base d'alumine et/ou de zircone et/ou d'oxyde de titane est un exemple approprié. D'autres matériaux, dont la nature suit, peuvent également convenir: carbone, silice (aérogel, silice poreuse), zéolithes, argiles, verre (verre fritté, verre Vycor®, microfibre de verre), polymères, métal (acier inoxydable, argent). L'utilisation d'un support en alumine de variété allotropique alpha ou gamma (notamment une alpha-alumine) est préférée. Ce support peut éventuellement être constitué de plusieurs couches de porosité variable. Toutes les géométries peuvent convenir pour le support et celui-ci peut-être, par exemple, tubulaire, spiralé, plan, sous forme de disque, de feuille ou encore de fibres.

Le support poreux est mis en contact avec une solution contenant les agents nécessaires à la formation du gel précurseur de la zéolithe. Ladite solution contenant les sources des éléments de charpente hydrolysables est constituée de ces sources pures ou diluées. Les sources des éléments de charpente hydrolysables sont susceptibles de conduire à des tétraèdres de type $TO_4$ (où T représente un élément choisi parmi Si, Al, B, Ga, Ge et P) et sont constitués préférentiellement d'alcoxydes dans le cas du silicium ou de l'aluminium et/ou de tétrachlorure de silicium, et/ou de trichlorure d'aluminium et/ou de sels d'aluminium comme le sulfate d'aluminium et/ou l'aluminate de sodium. De manière très préférée, il s'agit d'alcoxydes de silicium et/ou d'aluminium. La solution contient préférentiellement de l'eau et est éventuellement additionnée d'une molécule organique polaire et/ou d'un ou de plusieurs adjuvants de la réaction de formation du gel précurseur de la zéolithe et/ou d'un ou de plusieurs adjuvants de la cristallisation de la zéolithe.

Les adjuvants de la réaction de formation du gel sont constitués d'acides ou de bases minéraux et/ou organiques qui jouent le rôle de catalyseurs. Les acides chlorhydrique et fluorhydrique, la soude et l'ammoniaque sont des exemples appropriés.

Les adjuvants de la cristallisation de la zéolithe sont constitués d'acides ou de bases et/ou de sels minéraux et/ou organiques et/ou des molécules non dissociées servant essentiellement d'agents mobilisateurs et/ou d'agents structurants (ou «agents promoteurs de structure ») et assurant comme contre-ions la neutralité de charge de la charpente. Les ions hydroxydes ou fluorures sont les principaux agents mobilisateurs et sont introduits dans le milieu de préparation par exemple sous forme d'hydroxyde de sodium, d'hydroxydes organiques et d'acide fluorhydrique. Ces agents mobilisateurs permettent la dissolution des précurseurs. Divers agents structurants minéraux ou organiques peuvent convenir: des cations hydratés (ions sodium ou potassium), des paires ioniques (ions ammonium ou phosphonium et les anions correspondants) ou des molécules neutres (amines, alcools ou éthers). Comme adjuvants de cristallisation, on utilise le plus souvent l'hydroxyde ou le bromure de tétrapropylammonium ou un mélange des deux, les hydroxydes de sodium et potassium, l'ammoniaque, l'acide fluorhydrique et comme éthers, les éthers-couronnes ou des cryptands.

La première étape de formation du gel consiste à sécher au préalable le support poreux, à le refroidir à la température ambiante et à l'imprégner avec la solution contenant les sources des éléments de charpente hydrolysables. Le séchage du support peut être effectué à une température comprise entre 40°C et 600°C, pendant une durée comprise entre 1 minute et 48 heures. Il est préférentiellement effectué entre 60°C et 80°C pendant 1 nuit. L'imprégnation consiste de préférence à immerger le support dans la solution. Mais d'autres méthodes peuvent être utilisées, par exemple le dépôt de la solution sur la surface du support poreux. L'imprégnation peut être effectuée à une température comprise entre -20°C et 200°C, pendant une durée comprise entre 1 minute et 72 heures et sous une pression comprise entre $10^{-5}$ atmosphère et 1 atmosphère. Par exemple, l'imprégnation peut être effectuée à la température ambiante, pendant 30 minutes et sous une pression de $2.10^{-2}$ atmosphère.

La zéolithe est ensuite cristallisée par traitement hydrothermal. Pour ce faire, le mélange réactionnel résultant de la première étape de formation du gel et sa mise en contact avec le support poreux est placé dans un autoclave chemisé à l'intérieur de polytétrafluoroéthylène (PTFE), comme celui décrit par exemple dans le brevet EP-A-0 778 076, pour être soumis à une programmation en température sous pression autogène du mélange. La phase de cristallisation de la phase zéolithique est menée dans un premier temps à une température comprise entre 50°C et 300°C, préférentiellement entre 80°C et 220°C et pendant une durée comprise entre 1 heure et 15 jours, préférentiellement entre 3 heures et 72 heures. Le mélange est refroidi dans un deuxième temps à une température strictement inférieure à 50°C, préférentiellement inférieure à 40°C et de manière très préférée il est refroidi à température ambiante et maintenu à cette température sur une durée de 1 minute à 72 heures, préférentiellement de 20 minutes à 9 heures et de manière plus préférée de 30 minutes à 5 heures. Le système est ensuite porté à la température de la première étape pendant une durée comprise entre 1 heure et 15 jours, préférentiellement entre 3 heures et 72 heures.

La membrane ainsi formée est refroidie à la température ambiante pour être lavée de manière à éliminer au moins partiellement les adjuvants de la réaction de formation du gel et/ou ceux de la cristallisation de la zéolithe. Ce lavage est préférentiellement effectué avec de l'eau distillée. La membrane est ensuite séchée préférentiellement entre 60 et 80°C pendant une durée comprise entre 2 heures et 24 heures et refroidie à la température ambiante.

Les opérations précédentes de formation du gel suivie de la cristallisation de la zéolithe selon le programme de température non isotherme défini selon l'invention, le refroidissement de la membrane, le lavage et le séchage du matériau, peuvent être répétées plusieurs fois.

La membrane est ensuite calcinée par montée progressive à une température comprise entre 300°C et 800°C, préférentiellement entre 350°C et 600°C. Cette montée peut s'effectuer d'une manière continue ou par paliers pendant une durée comprise entre 5 heures et 50 heures. La température de calcination est ensuite maintenue à cette valeur pendant une durée comprise entre 10 minutes et 24 heures. La membrane est ensuite refroidie progressivement jusqu'à la température ambiante. Le refroidissement peut s'effectuer d'une manière continue ou par paliers pendant une durée comprise entre 1 heure et 24 heures.

La haute qualité des membranes obtenues grâce au procédé de l'invention, comme le montrent les exemples ci-après, n'est aucunement liée aux vitesses de montée et descente en température (rampe de température) lors de la mise en oeuvre de la programmation thermique non isotherme.

Ce procédé peut être appliqué à toutes les zéolithes, c'est-à-dire tous les solides cristallisés caractérisés par une structure comportant une charpente tridimensionnelle résultant de l'enchaînement de tétraèdres de type $TO_4$ (avec T = Si, Al, B, Ga, Ge et/ou P), chaque atome d'oxygène étant commun à deux tétraèdres, et des canaux et cavités de dimensions moléculaires. Les types structuraux FAU, GME, MOR, OFF, MFI, MEL, FER, LTA et CHA, selon la nomenclature IUPAC (Meier, W.M., Olson, D.H., in Atlas of Zeolite Structure-types (1992) Butterworth-Heinemann Ed.), sont des exemples appropriés.

Ce procédé peut aussi être appliqué à tous les solides résultant de l'enchaînement d'octaèdres de type $TO_6$ (avec T = Ti, Mn et/ou Mo), les titanosilicates par exemple, ou aux solides mésoporeux de type MCM-41 et MTS (Miscelles Templated Solids selon la terminologie anglo-saxonne). Dans ce dernier cas, des agents organiques miscellaires sont utilisés comme adjuvants de cristallisation.

L'épaisseur de la couche continue de zéolithe est contrôlée par la quantité de gel incorporé. Cette épaisseur est comprise entre 0,5 et 100 micromètres et préférentiellement entre 1 et 50 micromètres. Pour limiter les résistances au transfert moléculaire à travers le matériau lors de son application, l'épaisseur est très préférentiellement comprise entre 1 et 15 micromètres. La taille et la morphologie des cristaux dépendent des proportions relatives des différents réactifs constitutifs du gel. Les cristaux formés dans un milieu très basique sont généralement petits, de l'ordre de quelques micromètres à quelques dizaines de micromètres. Ils sont d'autant plus petits que le milieu est plus basique et ils sont alors d'autant mieux confinés dans la porosité du support utilisé.

Les membranes obtenues par la méthode de l'invention sont avantageusement utilisées dans des procédés de séparation de gaz (perméation gazeuse ou de vapeur) ou de séparation de liquides (pervaporation), éventuellement dans les procédés de filtration et électrophorèse. Parmi les procédés de séparation, on peut notamment citer la séparation :

- des isomères linéaires et ramifiés d'hydrocarbures comprenant 4 à 8 atomes de carbone (C4 à C8),
- des isomères paraffiniques en C6 et C7 selon le degré de ramification (espèces mono-, di-, tri-ramifiés),
- des isomères des xylènes,
- du mélange méthane/azote,
- du mélange hydrogène/hydrocarbures (n-butane par exemple)
- ou encore du mélange méthane/dioxyde de carbone.

L'invention est décrite de façon plus détaillée ci-après selon les exemples non limitatifs 1 à 5. L'exemple 2 est fourni à titre de comparaison.

## Exemple 1 : Préparation d'une membrane zéolithique par cristallisation programmée en température (invention)

Un support tubulaire en alpha-alumine de 150 mm de long (commercialisé par la Société US Filter) avec un diamètre moyen de pores de 0,2 micromètre est séché à 80°C pendant une nuit, refroidi à la température ambiante dans un dessiccateur garni de silica gel et pesé. Il est immergé dans une solution aqueuse contenant du silicium (3g d'Aérosil, Degussa), à laquelle sont additionnés 25 mL d'une solution aqueuse molaire d'hydroxyde d'ammonium tétrapropylé préalablement agitée à température ambiante durant 72h. Cette étape, dite de maturation ou de mûrissement permet une dépolymérisation partielle de la source de silice sous l'action d'agents mobilisateurs. Une centrifugation permet d'éliminer certains oligomères ou toute autre espèce présente dans le milieu dont la taille et la nucléarité ne sont pas parfaitement adaptées à la diffusion dans le réseau macroporeux du support. Le support et la solution sont placés dans un autoclave, lequel est introduit dans un four maintenu à 170°C pour une durée de 8h. A ce stade, par une programmation de l'étuve, le système est refroidi à température ambiante puis maintenu à température ambiante, ce qui nécessite 9h. Le mélange est finalement à nouveau porté à 170°C durant 72h pour achever l'étape de cristallisation. A l'issue de cette phase de synthèse hydrothermale, le support contenant la zéolithe est lavé avec 50 mL d'eau distillée par immersion de quelques minutes. Ce lavage est reproduit trois fois successivement (30 mn environ) en vérifiant que les eaux de rinçage sont neutres (valeurs de pH voisines de 7). Le matériau est séché à 80°C sous flux d'azote durant une nuit. La diffraction des rayons X révèle que la structure zéolithique obtenue est de type MFI. Avant l'étape de calcination, la membrane est étanche à l'azote ou au méthane car les canaux de la zéolithe se trouvent obstrués par les cations organiques d'ammonium tétrapropylé. Ceci démontre l'absence d'espaces interparticulaires entre les cristaux de zéolithe et l'obtention d'une couche composite continue.

Afin de libérer la porosité de la membrane par dégradation du composé organique promoteur de structure, le matériau est calciné à haute température à 500°C pendant 4h (vitesse de chauffe: 1,5°C/mn ; vitesse de refroidissement: 1°C/mn) puis refroidie à la température ambiante. La prise de masse du support est de 0,75g, correspondant à de la zéolithe cristallisée de type structural MFI (pores de 0,5 à 0,6 nm). Les cristallites de zéolithe sont localisés dans la porosité du support et la taille moyenne des cristaux de zéolithe dans la membrane formée varie de 0,1 à 5 micromètres.

## Exemple 2 : Préparation d'une membrane zéolithique par cristallisation isotherme (comparatif)

Le mode opératoire est semblable à celui décrit dans l'exemple 1 à l'exception de la température utilisée durant la phase de cristallisation. Le mélange réactionnel comprenant en particulier la source de silice hydrolysable, le composé organique en solution aqueuse et le support d'alpha-alumine est préparé selon le mode opératoire de l'exemple 1. Ce mélange est placé dans un autoclave pour un traitement hydrothermal mené à 170°C. Cette température est maintenue durant toute la phase de cristallisation (cristallisation isotherme). Le matériau résultant est ensuite lavé et calciné de manière analogue au matériau préparé selon l'exemple 1.

**Exemple 3 : Mesures de perméation gazeuse avec du n-butane pur et de l'isobutane pur**

Des mesures de perméation gazeuse sont effectuées sur la membrane préparée selon l'exemple 1, afin d'en caractériser les propriétés de structure et la qualité structurale.

Pour ce faire, la membrane est insérée dans un perméateur (module de mesure de perméation) grâce à des joints carbone qui maintiennent l'étanchéité de ce module de mesure. L'ensemble (module/membrane) est placé dans une unité de perméation gazeuse et le matériau est au préalable traité à 350°C sous un débit de gaz inerte comme l'hélium ce qui permet d'éliminer toute trace de gaz adsorbable sur la surface externe et dans la porosité interne du matériau membranaire. Ce traitement est réalisé avant tout changement de gaz, de manière à ne pas perturber les mesures en éliminant de la microporosité et de la surface du matériau toute trace de molécules adsorbées. Durant les mesures de perméation de gaz, la membrane est soumise à une différence de pression, la pression du côté amont où circule la charge (dans cet exemple du n-butane n-C4H10 pur ou de l'isobutane pur i-C4H10) est maintenue constante à 1.5 bar absolus et la pression du côté aval, où l'on récupère le perméat après extraction sélective d'une partie des molécules présentes dans la charge, est la pression atmosphérique. Cette différence de pression constitue la force motrice du transfert à travers la membrane. Le débit de gaz traversant la membrane est mesuré au moyen d'un débitmètre volumique. Le seuil de détection est inférieur à 0.002 mL/mn soit environ 10-6 mole/m2.s de butane ou isobutane.

La perméance d'un gaz, exprimée en mole/m2.s.Pa, est par définition, le débit molaire de ce gaz ramené à l'unité de surface membranaire et ramené à la différence de pression partielle de ce gaz entre l'amont (où circule la charge) et l'aval (où l'on récupère le perméat). La perméance d'un gaz est donc le débit molaire de ce gaz traversant la membrane par unité de surface et de pression. La sélectivité $\alpha$ (appelée permsélectivité) est, dans le cas de mesures de perméation de corps purs, le rapport des perméances de n-butane et d'isobutane.

La mesure des débits de gaz traversant la membrane est effectuée avec les corps purs butane ou isobutane. Ces molécules présentent l'avantage d'avoir des diamètres cinétiques très proches des dimensions de l'ouverture des pores de la zéolithe (0,55 nm dans le cas de la structure MFI, 0,43 nm pour le n-butane et 0,49 nm pour l'isobutane). Les perméances sont calculées pour chaque gaz et leur rapport est une mesure de la sélectivité de séparation. Il est généralement admis dans la littérature que des membranes de type MFI présentent une bonne intégrité texturale, c'est-à-dire une absence de défauts de structure de type mésopore et macropore, lorsque la sélectivité n-butane/isobutane est supérieure à 10 (Vroon et al., J. Membr. Sci. 113 (1996) 293). Il est à noter qu'avec le choix de ces molécules sondes que sont le n-butane et l'isobutane ce test est considéré comme un critère très sévère et sélectif pour caractériser des membranes inorganiques microporeuses telles que par exemple des zéolithes de type structural MFI.

Il convient de noter que ce test de mise en évidence des propriétés de structure et de la qualité structurale n'est pas adapté pour toutes les membranes. En particulier, il n'est pas adapté pour les membranes zéolithiques dont la zéolithe présente des pores larges telle que la zéolithe de type structural FAU, de topologie plus ouverte et qui ne permet pas de différencier significativement le transport des butanes linéaires et ramifiés.

Le tableau 1 résume les résultats de perméation de gaz obtenus sur les membranes préparées selon l'exemple 1 (préparation selon le procédé de l'invention).

Tableau 1 : Mesures des débits de gaz traversant le matériau membranaire préparé selon l'exemple 1 (synthèse membranaire selon l'invention, cristallisation programmée en température)

| Gaz | Différence de pression (kPa) | Température (°C) | Débit * | Perméance ** | Sélectivité nC$_4$/iC$_4$ |
|---|---|---|---|---|---|
| n-C$_4$H$_{10}$ i-C$_4$H$_{10}$ | 50 | 140 | 8,83 | 1,77 | infinie |
| | | | <0,001 | 0 | |
| n-C$_4$H$_{10}$ i-C$_4$H$_{10}$ | 50 | 180 | 10,57 | 2,11 | infinie |
| | | | < 0,001 | 0 | |
| n-C$_4$H$_{10}$ i-C$_4$H$_{10}$ | 50 | 220 | 9,08 | 1,82 | infinie |
| | | | < 0,001 | 0 | |
| *en mmol/s.m$^2$ <br> en 10$^{-7}$ mol/s.m$^2$.Pa | | | | | |

La membrane préparée selon l'invention est imperméable à l'isobutane, les débits inférieurs au seuil de détection analytique précisé ci-dessus n'étant pas mesurables. Sa sélectivité est infinie pour le n-butane, ce qui est représentatif de l'excellente qualité du matériau.

**Exemple 4 : Performances séparatrices des matériaux membranaires zéolithiques préparés selon l'invention**

Afin de confirmer la haute qualité des matériaux membranaires obtenus par la méthode de synthèse selon l'invention (décrite dans l'exemple 1), trois membranes (A, B, C) sont préparées selon ce mode de synthèse. Les performances en séparation sont évaluées par perméation gazeuse d'un mélange contenant de l'hydrogène et du n-butane. Le choix de ces molécules repose sur les interactions spécifiques qu'elles présentent avec des surfaces solides comme des micropores de zéolithe et ces interactions particulières peuvent être mises à profit pour la caractérisation de membranes lorsque les conditions opératoires sont judicieusement établies.

Il est connu qu'à basses températures, par exemple à température ambiante et à 20°C notamment, les hydrocarbures comme le n-butane, sont fortement adsorbés puis diffusent dans des pores de la zéolithe de type MFI notamment alors que l'hydrogène n'est que faiblement adsorbé (comme l'explicite l'article de référence de Coronas, J., Falconer, J.L., Noble, R.D., "Characterization of ZSM-5 Tubular Membranes", AIChe J. **43** (1997) 1797, ou plus récemment l'article de Dong, J., Lin, Y.S. et Liu, W., "Multicomponent Hydrogen/hydrocarbon Separation by MFI-type Zeolite Membranes", AIChe J. **46** (2000) 1957 avec des mélanges hydrogène-hydrocarbures C1-C4). Par suite, lorsque la membrane présente une très bonne qualité structurale et texturale, le n-butane s'adsorbe sur le matériau et diffuse à travers celui-ci, tandis que l'hydrogène ne s'adsorbe ni ne diffuse dans la microporosité du solide. Ces propriétés sont à relier à l'adsorption préférentielle de l'hydrocarbure dans la microporosité membranaire. On définit alors, pour une charge contenant un mélange de n-butane et d'hydrogène, un facteur de séparation Sf qui exprime l'enrichissement relatif de la phase ayant traversé la membrane en n-butane:

$$Sf=[(P_{nC4})_p/(P_{nC4})_0]/[(P_{H2})_p/(P_{H2})_o]$$

Où les indices p et o caractérisent respectivement le perméat (phase ayant traversé la membrane, enrichie en composé hydrocarboné) et la charge. Par mesure des concentrations ou pressions partielles, les facteurs de séparation n-butane/hydrogène sont déterminés à température ambiante. Plus ce facteur de séparation est élevé, meilleure est la qualité du matériau membranaire. Le tableau 2 résume les performances séparatrices des matériaux préparés selon le protocole décrit dans l'exemple 1. Les essais ont été conduits dans un perméateur isobare à 1.2 bar en présence d'azote à température ambiante. Les concentrations des gaz dans chaque phase (charge et perméat) sont mesurées par analyse chromatographique en ligne.

Tableau 2 : Performances des membranes préparées selon l'exemple 1 dans la séparation d'un mélange contenant les gaz n-butane/hydrogène. Charge $nC_4H_{10}/H_2/N_2$:12/15/73 molaire (75 ml/mn, 1,2 bar), balayage aval à l'azote sous 1,2 bar.

| Membranes | Sf à 20°C (facteur de séparation $nC_4H_{10}/H_2$) |
|---|---|
| A | 180,0 |
| B | 142,0 |
| C | 150,0 |

Dans tous les cas, les facteurs de séparation Sf sont très élevés, ce qui exprime un fort enrichissement du perméat (phase ayant traversé la membrane) en hydrocarbure butane par rapport à la charge. On estime en général que pour un facteur de séparation supérieur à 25 les matériaux sont de très bonne qualité. Les résultats obtenus démontrent donc la grande qualité des matériaux membranaires préparés selon le procédé de l'invention. Compte-tenu des propriétés d'adsorption/diffusion du système gaz-zéolithe décrites précédemment, ces résultats témoignent de la très haute qualité des matériaux membranaires obtenus. Ce mode de préparation permet donc en une seule étape de préparation hydrothermale d'obtenir des membranes de très haute intégrité texturale et cela en cristallisant une masse de solide relativement faible en limitant de manière significative l'épaisseur du matériau, ce qui est particulièrement intéressant au niveau industriel, en termes notamment de coût de matières premières, d'investissement (dimensionnement de l'outil de production) et de coûts opératoires.

**Exemple 5 : Performances séparatrices des matériaux membranaires zéolithiques préparés selon l'art antérieur**

Dans le but de comparer la qualité des membranes préparées selon l'invention par cristallisation programmée en température avec celle des membranes préparées en mode isotherme, six membranes (référencées E à J) sont préparées selon le mode de préparation de l'exemple 2, c'est-à-dire selon une procédure isotherme. Les performances de ces matériaux sont mesurées de manière rigoureusement identique au protocole de l'exemple 4. Les résultats de perméation sont indiqués dans le tableau 3.

Tableau 3 : performances des membranes préparées selon l'exemple 2 dans la séparation d'un mélange contenant les gaz n-butane/hydrogène. Charge $nC_4H_{10}/H_2/N_2$ 12/15/73 molaire (75 ml/mn, 1,2 bar), balayage aval à l'azote sous 1,2 bar.

| Membranes | Sf à 20°C (facteur de séparation $nC_4H_{10}/H_2$) |
|---|---|
| E | 3,6 |
| F | 5,0 |
| G | 4,7 |
| H | 5,9 |
| I | 2,6 |
| J | 1,2 |

Les facteurs de séparation obtenus dans tous les cas sont très faibles et très inférieurs à ceux obtenus avec les matériaux membranaires préparés selon la méthode de l'invention. Ceci signifie que les membranes E à J ne permettent qu'une séparation partielle, voire aucune séparation (membrane J) des molécules. Ces membranes E à J sont par conséquent très peu sélectives. Compte tenu des propriétés d'adsorption/diffusion du système gaz/zéolithe décrites précédemment, ces résultats témoignent de la présence de défauts dans la structure des membranes E à J, obtenues selon un mode de préparation isotherme.

**Revendications**

1. Une méthode de préparation d'une membrane zéolithe supportée constituée d'une couche composite zéolithe/support continue, d'épaisseur contrôlée, dont la phase zéolithique est localisée principalement dans la porosité d'un support poreux et éventuellement à la surface externe de celui-ci, comportant au moins la formation d'un gel précurseur de ladite zéolithe, la mise en contact de celui-ci avec ledit support et la cristallisation de la zéolithe, **caractérisée en ce que** ladite zéolithe est cristallisée par la mise en oeuvre d'une programmation thermique non isotherme comportant successivement au moins trois étapes constituées par un premier palier de température mené à une température comprise entre 50°C et 300°C suivi d'un refroidissement à une température strictement inférieure à 50°C lui-même suivi d'un second palier de température mené à une température égale à celle du premier palier.

2. Une méthode de préparation d'une membrane zéolithe supportée selon la revendication 1, **caractérisée en ce que** le premier palier de température est mené à une température comprise entre 80°C et 220°C.

3. Une méthode de préparation d'une membrane zéolithe supportée selon la revendication 1 ou 2, **caractérisée en ce que** le premier palier de température est maintenu pendant une durée comprise entre 1 heure et 15 jours.

4. Une méthode de préparation d'une membrane zéolithe supportée selon l'une des revendications 1 à 3, **caractérisée en ce que** le second palier de température est mené à une température comprise entre 80°C et 220°C.

5. Une méthode de préparation d'une membrane zéolithe supportée selon l'une des revendications 1 à 4, **caractérisée en ce que** le second palier de température est maintenu pendant une durée comprise entre 1 heure et 15 jours.

6. Une méthode de préparation d'une membrane zéolithe supportée selon l'une des revendications 1 à 5, **caractérisée en ce que** le refroidissement est mené jusqu'à température ambiante.

7. Une méthode de préparation d'une membrane zéolithe supportée selon l'une des revendications 1 à 6, **caractérisée en ce que** le support est constitué d'un matériau poreux dont les pores ont des diamètres compris entre 4 nanomètres et 100 micromètres, et dont la fraction de volume poreux total est supérieure à 5%.

8. Une méthode de préparation d'une membrane zéolithe supportée selon l'une des revendications 1 à 7, **caractérisée**

**en ce que** le support est constitué d'un matériau inorganique, organique ou mixte et choisi préférentiellement parmi les matériaux suivants : céramique à base d'alumine et/ou de zircone et/ou d'oxyde de titane, métaux, verres, carbone, silice, zéolithes, argiles et polymères.

9. Une méthode de préparation d'une membrane zéolithe supportée selon la revendication 8, **caractérisée en ce que** la géométrie du support est plane, tubulaire, sous forme de spirale ou de fibres.

10. Une méthode de préparation d'une membrane zéolithe supportée selon l'une des revendications 1 à 9, **caractérisée en ce que** les précurseurs de la couche zéolithique sont constitués d'alcoxydes de silicium et/ou d'aluminium et/ou de tétrachlorure de silicium et/ou de trichlorure d'aluminium.

11. Une méthode de préparation d'une membrane zéolithe supportée selon l'une des revendications 1 à 10, **caractérisée en ce que** la solution contenant les précurseurs de la couche zéolithique est additionnée d'un ou plusieurs des éléments suivants : une molécule organique polaire, un ou plusieurs adjuvants de la réaction de formation dudit gel zéolithique, un ou plusieurs adjuvants de la cristallisation de ladite zéolithe.

**Patentansprüche**

1. Verfahren zur Herstellung einer gestützten Zeolithmembran, welche aus einer durchgehenden Zeolith/Träger Gemischschicht mit überwachter Dicke besteht, wovon die zeolithische Phase hauptsächlich in dem Porenraum eines porösen Trägers und möglicherweise an dessen Außenfläche örtlich festgelegt ist, umfassend mindestens die Erzeugung eines Vorläufergels des besagten Zeolithen, die Kontaktierung dessen mit dem besagten Träger und die Kristallisation des Zeolithen, **dadurch gekennzeichnet , dass** der besagte Zeolith kristallisiert wird, indem man eine nicht-isotherme thermische Programmierung durchführt, umfassend hintereinander mindestens drei Schritte, welche durch eine erste Temperaturstufe, welche mit einer Temperatur zwischen 50°C und 300°C geführt wird, gefolgt von einer Abkühlung auf eine Temperatur streng unterhalb von 50°C, welche ihrerseits von einer zweiten Temperaturstufe, welche auf eine Temperatur gleich jene der ersten Temperaturstufe geführt wird, gefolgt ist.

2. Verfahren zur Herstellung einer gestützten Zeolithmembran nach dem Anspruch 1, **dadurch gekennzeichnet, dass** die erste Temperaturstufe auf eine Temperatur zwischen 80°C und 220°C geführt wird.

3. Verfahren zur Herstellung einer gestützten Zeolithmembran nach dem Anspruch 1 oder 2, **dadurch gekennzeichnet, dass** die zweite Temperaturstufe während einer Zeitdauer zwischen 1 Stunde und 15 Tagen beibehalten wird.

4. Verfahren zur Herstellung einer gestützten Zeolithmembran nach einem der Ansprüche 1 bis 3, **dadurch gekennzeichnet , dass** die zweite Temperaturstufe auf eine Temperatur zwischen 80 und 220°C geführt wird.

5. Verfahren zur Herstellung einer gestützten Zeolithmembran nach einem der Ansprüche 1 bis 4, **dadurch gekennzeichnet, dass** die zweite Temperaturstufe während einer Zeitdauer zwischen 1 Stunde und 15 Tagen beibehalten wird.

6. Verfahren zur Herstellung einer gestützten Zeolithmembran nach einem der Ansprüche 1 bis 5, **dadurch gekennzeichnet , dass** die Abkühlung bis auf Umgebungstemperatur geführt wird.

7. Verfahren zur Herstellung einer gestützten Zeolithmembran nach einem der Ansprüche 1 bis 6, **dadurch gekennzeichnet , dass** der Träger aus einem porösen Material besteht, dessen Poren jeweils einen Durchmesser zwischen 4 nm und 100 $\mu$m aufweisen, und dessen Anteil an porösem Gesamtvolumen oberhalb von 5% liegt.

8. Verfahren zur Herstellung einer gestützten Zeolithmembran nach einem der Ansprüche 1 bis 7, **dadurch gekennzeichnet , dass** der Träger aus einem anorganischen, organischen oder gemischten Material besteht, welches vorzugsweise aus den folgenden Materialien ausgewählt ist: Keramik auf Basis von Tonerde und/oder Zirkonerde und/oder Oxiden von Titan, Metallen, Gläsern, Kohlenstoff, Kieselsäure, Zeolithe, Tonerden und Polymeren.

9. Verfahren zur Herstellung einer gestützten Zeolithmembran nach einem der Ansprüche 1 bis 8, **dadurch gekennzeichnet, daß** die Geometrie des Trägers eben, röhrenförmig, in Form von Spiralen oder Fasern ausgebildet ist.

10. Verfahren zur Herstellung einer gestützten Zeolithmembran nach einem der Ansprüche 1 bis 9, **dadurch gekennzeichnet, dass** die Vorläufer der zeolithischen Schicht aus Alkoxiden von Silizium, und/oder von Aluminium, und/ oder aus Tetrachlorid von Silizium und oder aus Trichloriden von Aluminium aufgebaut sind,

11. Verfahren zur Herstellung einer gestützten Zeolithmembran nach einem der Ansprüche 1 bis 10, **dadurch gekennzeichnet, dass** der Lösung, welche die Vorläufer der zeolithischen Schicht enthält, eines oder mehrere der nachfolgenden Elemente hinzugefügt werden: ein polares organisches Molekül, ein oder mehrere Zusatzstoffe der Darstellungsfraktion des besagten zeolithischen Gels, ein oder mehrere Zusatzstoffe der Kristallisation des besagten Zeolith.

**Claims**

1. A method for preparing a supported zeolite membrane constituted by a composite continuous zeolite/support layer of controlled thickness, wherein the zeolitic phase is principally localised in the pores of a porous support and optionally on the external surface thereof, comprising at least the formation of a precursor gel of said zeolite, bringing said gel into contact with said support and crystallising the zeolite, **characterized in that** said zeolite is crystallised by carrying out a non-isothermal thermal programme comprising at least three steps in succession constituted by a first constant temperature stage carried out at a temperature in the range 50°C to 300°C, followed by cooling to a temperature of strictly less than 50°C, itself followed by a second constant temperature stage carried out at a temperature equal to that of the first stage.

2. A method for preparing a supported zeolitic membrane according to claim 1, **characterized in that** the first temperature stage is carried out at a temperature in the range 80°C to 220°C. -

3. A method for preparing a supported zeolitic membrane according to claim 1 or claim 2, **characterized in that** the first temperature stage is maintained for a period in the range 1 hour to 15 days.

4. A method for preparing a supported zeolitic membrane according to any one of claims 1 to 3, **characterized in that** the second temperature stage is carried out at a temperature of 80°C to 220°C.

5. A method for preparing a supported zeolitic membrane according to any one of claims 1 to 4, **characterized in that** the second temperature stage is maintained for a period in the range 1 hour to 1 days.

6. A method for preparing a supported zeolitic membrane according to any one of claims 1 to 5, **characterized in that** said cooling is carried out to ambient temperature.

7. A method for preparing a supported zeolitic membrane according to any one of claims 1 to 6, **characterized in that** the support is constituted by a porous material with pore diameters in the range 4 nanometres to 100 micrometers, and wherein the fraction of the total pore volume is more than 5%.

8. A method for preparing a supported zeolitic membrane according to any one of claims 1 to 7, **characterized in that** the support is constituted by an inorganic, organic or mixed material and is preferably selected from the following materials: alumina-and/or zirconia- and/or titanium oxide- based ceramic, metals, glasses, carbon, silica, zeolites, clays and polymers.

9. A method for preparing a supported zeolitic membrane according to claim 8, **characterized in that** the support geometry is planar, tubular, or in the form of a coil or fibres.

10. A method for preparing a supported zeolitic membrane according to any one of claims 1 to 9, **characterized in that** the precursors for the zeolitic layer are constituted by silicon and/or aluminium alkoxides and/or silicon tetrachloride and/or aluminium trichloride.

11. A method for preparing a supported zeolitic membrane according to any one of claims 1 to 10, **characterized in that** the solution containing the precursors for the zeolitic layer is supplemented by one or more of the following elements: a polar organic molecule, one or more aids to the reaction for forming said zeolitic gel, or one or more aids to crystallising said zeolite.